# EUROPÄISCHE PATENTSCHRIFT

(11) **EP 1 118 489 B1**
(45) Veröffentlichungstag und Bekanntmachung des Hinweises auf die Patenterteilung: **22.08.2007**
(21) Anmeldenummer: 01101011.3
(22) Anmeldetag: 18.01.2001
(51) Int. Cl.: B60J 7/14, B60J 7/20

(54) **Umwandelbares Fahrzeugdach**
Convertible vehicle roof
Toit de véhicule convertible

(30) Priorität: 18.01.2000 DE 10001958
(43) Veröffentlichungstag der Anmeldung: 25.07.2001
(60) Teilanmeldung: 07011348.5
(73) Patentinhaber: Webasto AG, 82131 Stockdorf (DE)
(72) Erfinder: Schütt, Thomas, 82256 Fürstenfeldbruck (DE); Miklosi, Stefan, 81247 München (DE)
(74) Vertreter: Konnerth, Dieter Hans

(56) Entgegenhaltungen:
- DE-U- 29 809 006

## Beschreibung

Die Erfindung betrifft ein Fahrzeug mit einem umwandelbaren Fahrzeugdach mit einem vorderen Dachelement und einem hinteren Heckelement, die mittels Hebeleinrichtungen an der Karosserie schwenkbar gelagert und in einen von einer schwenkbaren Stauraumabdeckung abdeckbaren Verdeckstauraum ablegbar sind.

Aus der DE 44 35 222 C1 ist ein derartiges Fahrzeug mit einem Fahrzeugdach mit einem vorderen Dachelement und einem hinteren Heckelement bekannt geworden. Das Dachelement, das über schwenkbar angelenkte Dachlenker am Windlauf verriegelbar ist, ist mittels eines Schwenkhebels an der Karosserie schwenkbar angelenkt. Das Heckelement, das sich an das Dachelement nach hinten anschließt und dichtend auf einer Verdeckkastenklappe aufsitzt, die den Übergang zum Kofferraum bildet, ist über einen an der Karosserie gelagerten Schwenkhebel, der mittels eines Hydraulikzylinders schwenkbar ist und über einen weiteren Hydraulikzylinder an einem hinteren Anlenkpunkt des Heckelements mit diesem gekoppelt ist, sowie mit einem zusätzlichen Hydraulikzylinder und einer dazu parallelen Teleskopführung, die einerseits am Schwenkhebel befestigt sind und andererseits an dem Heckelement an einem vorderen Anlenkpunkt angreifen, derart bewegbar gelagert, daß es durch Verschwenken und Betätigen der Hebel- und Hydraulikzylindereinrichtungen aus seiner Schließstellung von der Verdeckkastenklappe abgehoben und nach vorne über das Dachelement verschwenkt werden kann. Nachdem das Heckelement an dem Dachelement verriegelt und der Dachlenker entriegelt worden ist, wird durch Betätigen der Hebel- und Hydraulikzylindereinrichtungen das Dachelement als Einheit mit dem Heckelement nach hinten in einen Stauraum verschwenkt und darin im wesentlichen horizontal abgelegt. Das Dachelement verschwenkt dabei entsprechend der Führung durch seinen Schwenklenker sowie durch die Hebel- und Hydraulikzylindereinrichtungen des Heckelements. Diese horizontale Ablage des Dachelements und des Heckelements erfordert jedoch einen großen Stauraum, der bis in den Kofferraum reicht und diesen verkleinert.

In der DE 43 26 255 C1 ist ein Cabrio-Fahrzeug mit einem Hardtop-Dach offenbart, das einen vorderen Dachabschnitt und einen hinteren Dachabschnitt aufweist. Der vordere Dachabschnitt enthält seitliche Dachteile und ein hinteres Dachteil sowie einen öffnungsfähigen Deckel, der an den seitlichen Dachteilen verschiebbar gelagert ist. Der vordere Dachabschnitt ist an B-Säulen schwenkbar gelagert und zum Ablegen des Daches mit den B-Säulen entlang karosseriefesten Längsführungen nach hinten verschiebbar und anschließend absenkbar. Der hintere Dachabschnitt enthält eine Heckscheibe und von dieser unabhängig bewegbare seitliche Dreieckfenster. Die Heckscheibe ist an Führungen, die im hinteren Dachteil des vorderen Dachabschnitts angeordnet sind, verschiebbar gelagert und wird von einem Antrieb nach vorne unter das hintere Dachteil geschoben. Die seitlichen Dreieckfenster sind über die Antriebe in eine abgesenkte Position an den Seiten des Stauraumes absenkbar. Der hintere Dachabschnitt verbleibt beim Ablegen somit nicht in seiner Konfiguration, sondern die Heckscheibe wird von den Seitenfenstern getrennt und an den vorderen Dachabschnitt verlagert. Dafür sind zusätzliche Antriebe und Führungen erforderlich, so daß dieses Dach aufwendig aufgebaut ist. Da die seitlichen Dachfenster lediglich um eine hintere karosseriefeste Schwenkachse herabgeschwenkt werden, benötigen sie einen vergleichsweise großen Ablageraum in Fahrzeuglängsrichtung.

Ein in der US-A-2812975 offenbartes Fahrzeug mit einem umwandelbaren Fahrzeugdach enthält drei Dachelemente, von denen das hintere Dachelement über einen Schwenkarm unmittelbar an der Karosserie schwenkbar gelagert ist und die beiden vorderen Dachelemente an dem hinteren Dachelement über Lenkereinrichtungen angelenkt sind und damit nur mittelbar an der Karosserie gelagert sind. Der einzelne hydraulische Antriebszylinder muß das Gewicht des gesamten Daches verschwenken. Zusätzlich sind noch weitere Hilfsantriebe zum Bewegen der vorderen Dachteile erforderlich. Somit ist eine sehr aufwendige Lager- und Antriebskonstruktion erforderlich.

Die EP 0 846 378 A offenbart ein Fahrzeug mit einem Fahrzeugdach mit einem vorderen Dachelement, das mittels eines Viergelenks an der Karosserie schwenkbar angelenkt ist, und mit einem hinteren Dachteil, das über ein einfaches Scharnier an der Karosserie angelenkt ist. Bei einem Ausführungsbeispiel enthält das hintere Dachteil einen Verdeckkastendeckel, der die scharnierartige Schwenklagerung an der Karosserie enthält.

Der Erfindung liegt die Aufgabe zugrunde, ein eingangs genanntes Fahrzeug mit einem umwandelbaren Fahrzeugdach zu schaffen, das mit einem verbesserten Ablagemechanismus in einer platzsparenden Anordnung in einem Verdeckstauraum ablegbar ist.

Die Aufgabe wird erfindungsgemäß durch ein Fahrzeug mit einem umwandelbaren Fahrzeugdach mit den Merkmalen des Anspruchs 1 gelöst.

Durch diese platzsparende Anordnung des abgelegten Fahrzeugdachs oder Verdecks wird das Kofferraumvolumen nicht eingeschränkt. Des weiteren bleibt durch die in etwa vertikale Ausrichtung des abgelegten Fahrzeugdaches in dem entsprechenden sich im wesentlichen vertikal erstreckenden Verdeckstauraum ein direkt hinter den Sitzen vorgesehener Nutzraum auch bei abgelegtem Fahrzeugdach von oben zugänglich.

Die das Dachelement lagernde Hebeleinrichtung enthält zwei einen Viergelenkmechanismus bildende Hebel. In Abhängigkeit von den gewählten Positionen der Gelenke der beiden Hebel kann auf einfache Weise die Schwenkbewegung des Dachelementes vorgegeben und eingestellt werden. In vergleichbarer Gestaltung weist die das Heckelement lagernde Hebeleinrichtung zwei einen Viergelenkmechanismus bildende Lenker auf.

Vorteilhafte Ausgestaltungen der Erfindung sind in den Unteransprüchen angegeben.

Das Heckelement, das insbesondere eine Heckscheibe enthalten kann, wird bevorzugt als Einheit in den Verdeckstauraum abgelegt. Da das Heckelement zum Ablegen nicht in unterschiedliche Baugruppen aufgeteilt wird, sind keine entsprechenden aufwendigen Mechanismen erforderlich. Jedoch kann das Heckelement auch Elemente aufweisen, die beim Ablegen in eine platzsparende Anordnung gegeneinander bewegt werden, beispielsweise Seitenteile oder Seitenfenster, die an den Mittelteil geklappt werden.

Vorzugsweise ist das Heckelement bei geschlossenem Dachelement im Verdeckstauraum ablegbar, so daß ein Fahrbetrieb bei teilweise geöffnetem Fahrzeugdach möglich ist. Dabei ist das Heckelement unabhängig vom Dachelement ablegbar und auch entnehmbar, um das Fahrzeugdach wieder zu schließen. In einer zweckmäßigen Gestaltung ist eine an der Karosserie schwenkbar gelagerte Stauraumabdeckung des Verdeckstauraumes bei geschlossenem Heckelement aus ihrer Abdeckstellung nach oben schwenkbar, wodurch ein einfacher Bewegungsablauf beim Ablegen des Heckelements ermöglicht ist.

Besonders bevorzugt ist eine Gestaltung, wonach bei geschlossenem Fahrzeugdach die Hebeleinrichtung bzw. die Hebel des Dachelements im wesentlichen vertikal in etwa im Bereich eines einen Türfensterrahmen oder ein rahmenloses Türfenster begrenzenden seitlichen Vorderrandes des Heckelements angeordnet sind. Durch diese Anordnung wird die freie Sicht durch eine im Heckelement angeordnete Seitenscheibe nicht oder nur geringfügig beeinträchtigt. Wenn das Heckelement geöffnet bzw. abgelegt ist, befinden sich die Hebel in dieser Teilöffnungsstellung seitlich in einer die Sicht zum Fahrzeugheck und insbesondere schräg nach hinten im wesentlichen nicht behindernden Anordnung.

Wenn der hinter den Sitzen angeordnete Verdeckstauraum für das Fahrzeugdach zu den Sitzen hin von einer schwenkbaren Innenabdeckung begrenzt ist, kann der Zugang zu dem Verdeckstauraum zum Ablegen des Fahrzeugdaches durch Verschwenken der Innenabdeckung nach vorne in Richtung zu den Sitzen hin im erforderlichen Maß geöffnet werden.

Wenn die schwenkbare Innenabdeckung zumindest teilweise flexibel gestaltet ist, kann ein unmittelbar hinter den Sitzen vorgesehener Nutzraum bei geschlossenem Fahrzeugdach in den Verdeckstauraum hinein erweitert werden, ohne daß die Innenabdeckung entfernt werden müßte.

Bevorzugt sind die beiden Hebeleinrichtungen derart ausgelegt, daß zum vollständigen Öffnen des Fahrzeugdaches nach dem Hochschwenken der Stauraumabdeckung und dem Vorschwenken der Innenabdeckung zunächst das Heckelement und anschließend das Dachelement in den Verdeckstauraum abgelegt wird.

Zweckmäßigerweise enthalten das Dachelement und das Heckelement jeweils einen eigenen Antrieb, jedoch kann auch eine Antriebseinrichtung mit festgelegtem Bewegungsablauf für das Dachelement und das Heckelement vorgesehen sein.

Für eine einfache und dennoch sichere Befestigung der die Hebel und Lenker karosserieseitig lagernden Gelenke kann vorgesehen sein, daß diese an einer Lagerplatte an der Karosserie angeordnet sind.

Nachfolgend wird ein Ausführungsbeispiel der Erfindung unter Bezugnahme auf Zeichnungen näher erläutert. Es zeigt:
- Fig. 1: in einer Seitenansicht in schematischer Darstellung ein Hardtop-Fahrzeugdach eines Cabriolets in geschlossener Stellung;
- Fig. 2: in einer Seitenansicht das Fahrzeugdach mit einer hochgeschwenkten Stauraumabdeckung eines Verdeckstauraumes;
- Fig. 3: in einer Seitenansicht das Fahrzeugdach mit einer vorgeschwenkten Innenabdeckung des Verdeckstauraumes;
- Fig. 4: in einer Seitenansicht das Fahrzeugdach beim Öffnen seines Heckelements;
- Fig. 5: in einer Seitenansicht das Fahrzeugdach mit in dem Verdeckstauraum abgelegtem Heckelement;
- Fig. 6: in einer Seitenansicht das Fahrzeugdach in einer Teilöffnungsstellung;
- Fig. 7: in einer Seitenansicht das Fahrzeugdach beim Ablegen seines vorderen Dachelements in den Verdeckstauraum; und
- Fig. 8: in einer Seitenansicht das abgelegte Fahrzeugdach in der Offenstellung.

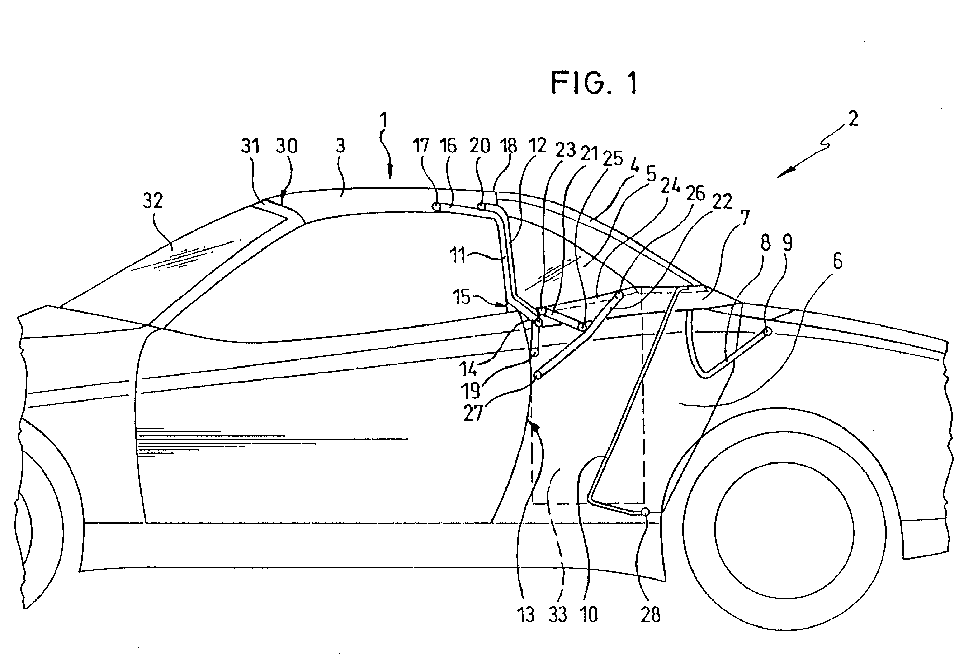

Ein Fahrzeugdach 1 eines Cabriolets 2 ist als umwandelbares Hardtop gestaltet (siehe Fig. 1) und weist ein vorderes festes Dachelement 3 und ein hinteres festes Dach- oder Heckelement 4 auf, das eine hintere Seitenscheibe 5 und eine Heckscheibe enthalten kann. Das Fahrzeugdach 1 ist zum Öffnen umwandelbar, indem das Dachelement 3 und das Heckelement 4 in einen Verdeckstauraum 6, der hinter den Sitzen und vor dem Kofferraum angeordnet ist, im wesentlichen vertikal abgelegt wird. Eine Stauraumabdeckung 7 ist über einen Lenker 8 mit einem rückwärtigen Gelenk 9 an der Karosserie gelagert und umgibt das Heckelement 4 an dessen Unterrand seitlich und hinten in etwa U-förmig, wobei sie aus ihrer bei geschlossenem Fahrzeugdach 1 den Verdeckstauraum 6 abdekkenden Stellung, in der sie am Unterrand des Heckelements 4 dicht anliegt, hochklappbar ist (die Beschreibung des Fahrzeugdachs erfolgt anhand der dem Betrachter zugewandten, bezüglich des Fahrzeugs linksseitigen Lagereinrichtungen, wobei selbstverständlich auch die gegenüberliegende rechte Fahrzeugseite die entsprechenden Lagereinrichtungen aufweist). Eine Innenabdeckung 10, die den Verdeckstauraum 6 zu den Sitzen hin begrenzt, ist an einem unteren Schwenkgelenk 28 im Bereich des Karosseriebodens schwenkbar gelagert. Bei geschlossenem Fahrzeugdach 1 (siehe Fig. 1) liegt die Innenabdeckung 10 innen am hinteren Unterrand des Heckelements 4 an. Die Innenabdeckung 10 kann eine starre Platte oder einen starren Rahmen mit einer flexiblen Bespannung aufweisen.

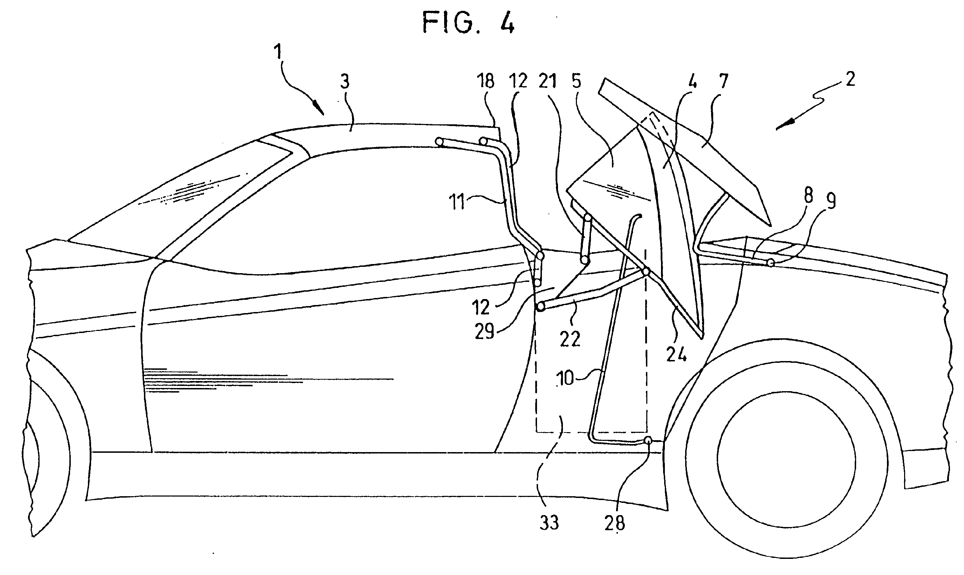

Das vordere Dachelement 3 ist am Fahrzeug mittels einer innerhalb des Fahrzeugdaches 1 angeordneten Hebeleinrichtung schwenkbeweglich gelagert, die zwei eine Viergelenkanordnung bildende Hebel 11 und 12 aufweist. Der erste Hebel 11 der Hebeleinrichtung ist im Bereich des hinteren Türrahmens 13 innen an der Karosserie in einem unteren Gelenk 14 gelagert und in Schließstellung des Fahrzeugdaches 1 im wesentlichen vertikal entlang eines seitlichen Vorderrandes 15 des Heckelements 4 ausgerichtet, wobei der Hebel 11 an der Innenseite des Heckelements 4 z. B. hinter einer am seitlichen Vorderrand 15 des Heckelements 4 für eine Türseitenscheibe angebrachten Türdichtung angeordnet ist. Ein oberer Endabschnitt 16 des Hebels 11 ist entlang einer oberen Türdichtung am Seitenrand des Dachelements 3 nach vorne abgewinkelt und erstreckt sich bis zu einem Gelenk 17, das vom Hinterrand 18 des Dachelements 3 beabstandet ist. Der zweite Hebel 12 der Hebeleinrichtung ist an einem unteren Gelenk 19 gelagert, das seitlich an der Karosserie in etwa unterhalb des unteren Gelenks 14 des ersten Hebels 11 angeordnet ist. Der zweite Hebel 12 erstreckt sich in etwa neben dem ersten Hebel 11 aufwärts bis zu einem Gelenk 20 im Bereich des Hinterrands 18 des Dachelements 3. Die Anordnungspositionen der Gelenke 14, 17 und 19, 20 der Hebel 11 bzw. 12 sind entsprechend des durch die Viergelenkanordnung erzielbaren Bewegungsverhaltens gewählt. Die beiden unteren Gelenke 14 und 19 können an einem karosseriefesten Lagerteil 29, z. B. einer Lagerplatte, angebracht sein (Fig. 4).

Das Heckelement 4 ist über eine Hebeleinrichtung mit zwei in Viergelenkanordnung gelagerten Lenkern 21 und 22 an der Karosserie schwenkbeweglich gelagert. Der erste Lenker 21 ist an einem Gelenk 23 im Vorderbereich am seitlichen Unterrand 24 des Heckelements 4 und an einem an der Karosserie angeordneten Gelenk 25 gelagert. Der zweite Lenker 22 ist einerseits an einem Gelenk 26 im Hinterbereich am seitlichen Unterrand 24 des Heckelements 4 und andererseits an einem Gelenk 27 an der Karosserie im Bereich des hinteren Türrahmens 13 unterhalb des Gelenks 19 des zweiten Hebels 12 des Dachelements 3 gelagert.

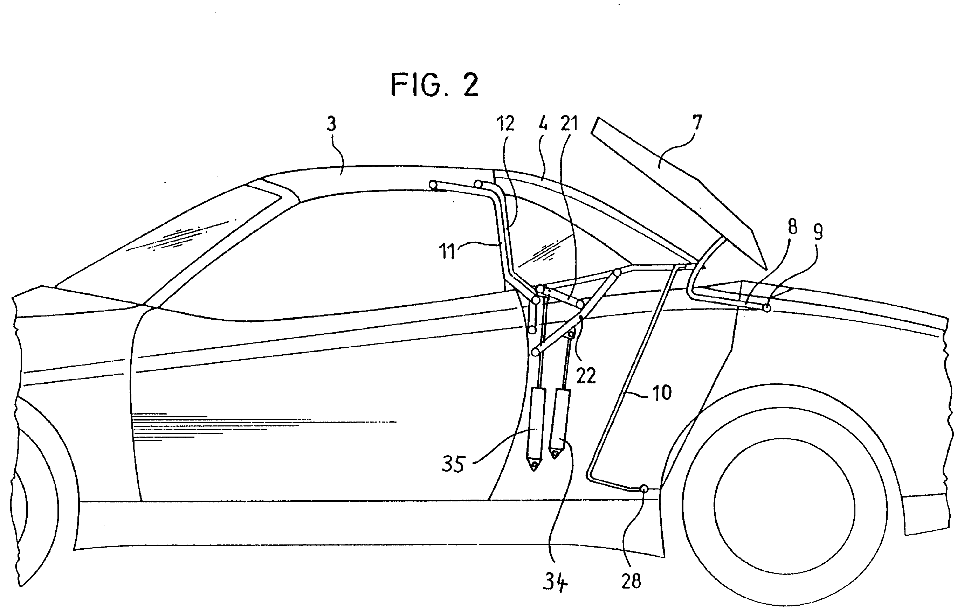

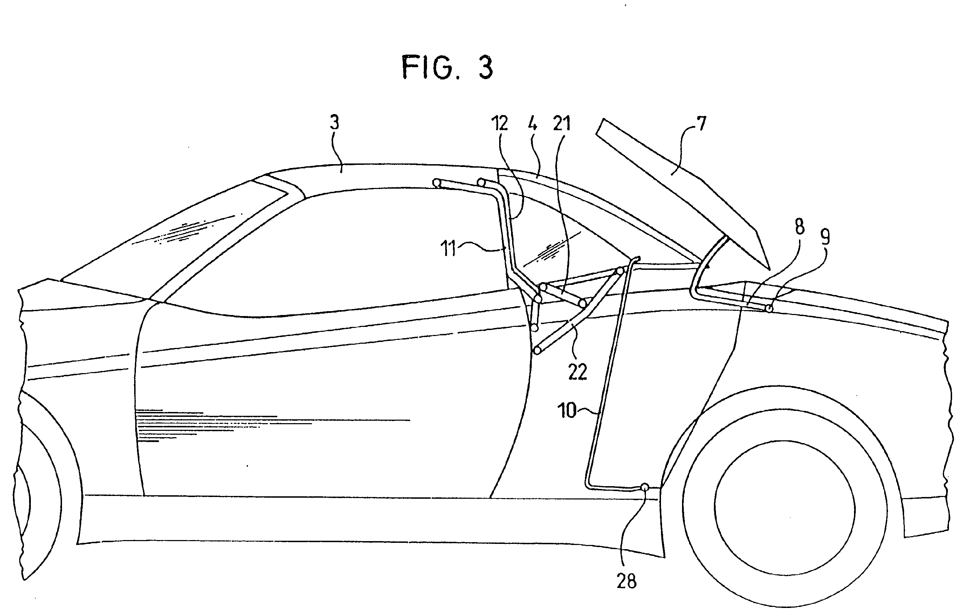

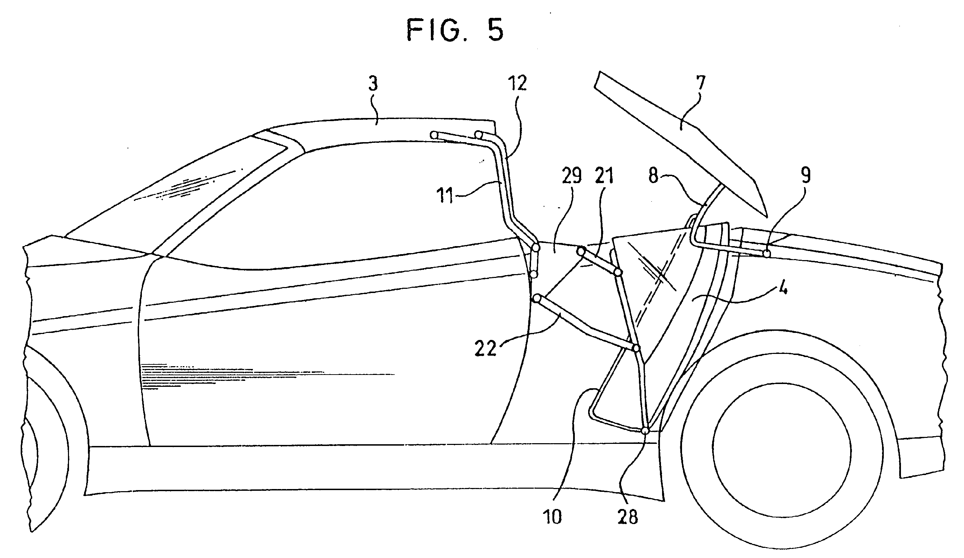

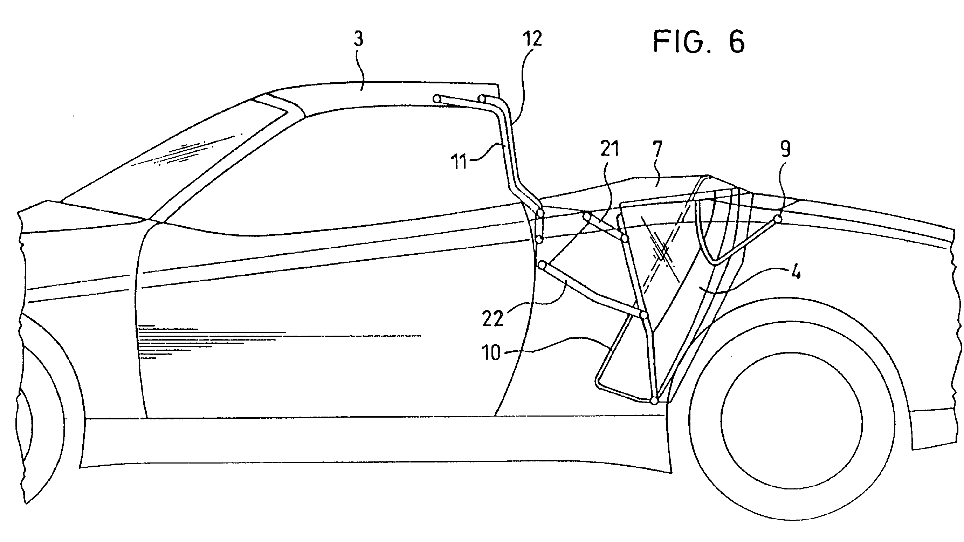

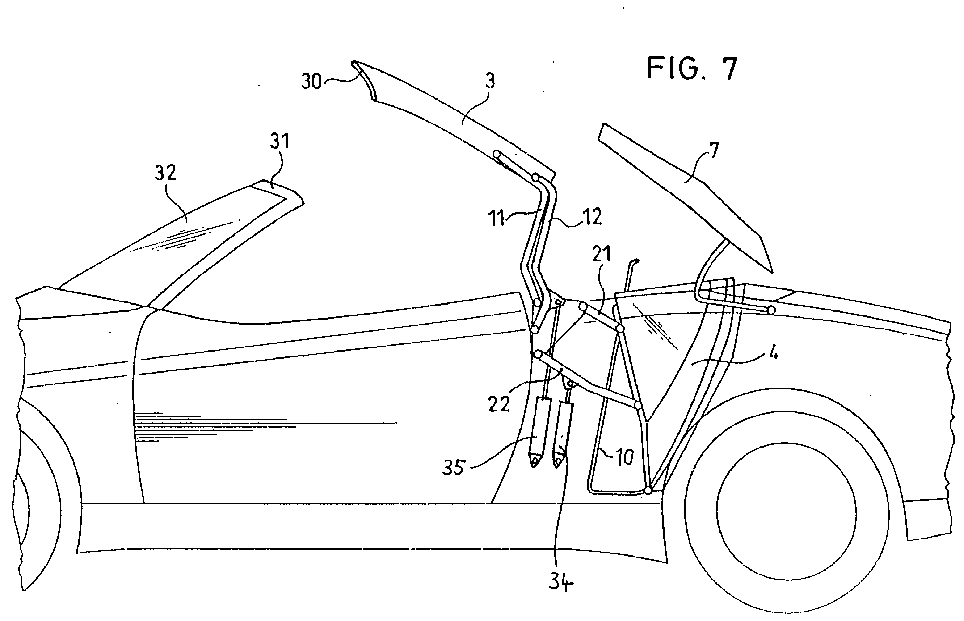

Zum Öffnen des Fahrzeugdaches 1 wird die Stauraumabdeckung 7 durch einen nicht dargestellten Antrieb um ihr Gelenk 9 nach oben geschwenkt (Fig. 2) und die Innenabdeckung 10 des Verdeckstauraums 6 wird nach vorne in Richtung zu den Sitzen geklappt, so daß der Verdeckstauraum 6 nach oben hin geöffnet ist (Fig. 3). Anschließend wird das Heckelement 4 durch einen Antrieb 34 (schematisch in den Fig. 2 und 7 als hydraulische Kolben-Zylindereinheit beispielhaft dargestellt), der einerseits an dem Lenker 22 und andererseits an der Karosserie gelagert ist, aus seiner Schließstellung nach hinten und abwärts in den Verdeckstauraum 6 geschwenkt (Fig. 4) und in etwa in vertikaler Ausrichtung abgelegt (Fig. 5). Die Innenabdeckung 10 wird in ihre Ausgangsposition zurückgeschwenkt. Nach dem Herabschwenken der Stauraumabdeckung 7 in ihre den Verdeckstauraum 6 abdeckenden Ausgangsposition auf der Karosserie (Fig. 6) befindet sich das Fahrzeugdach 1 in einer fahrbereiten Teilöffnungsstellung, in der das Heckelement 4 in dem Verdeckstauraum 6 abgelegt ist.

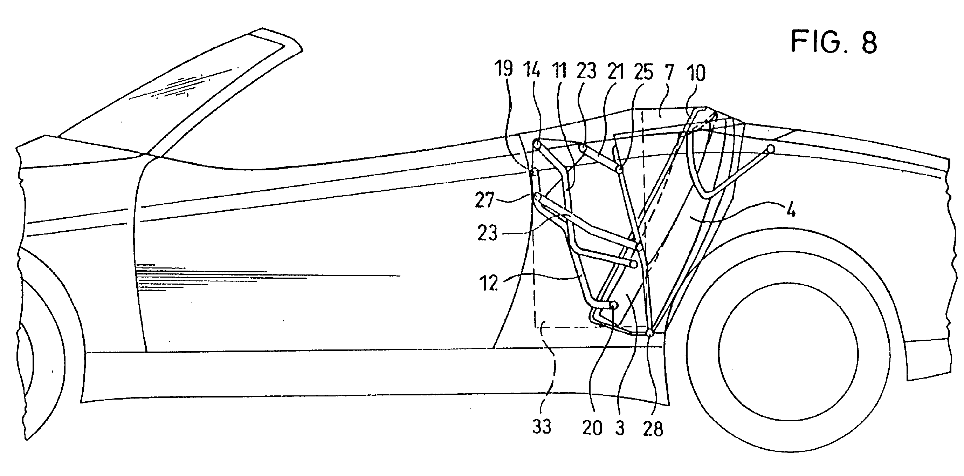

Zum vollständigen Öffnen des Fahrzeugdaches 1 wird bei geöffneter Stauraumabdeckung 7 und nach vorne geklappter Innenabdeckung 10 das Dachelement 3, nachdem es an seinem Vorderrand 30 aus einem Riegeleingriff an einem Windlauf 31 oberhalb der Frontscheibe 32 entriegelt worden ist, durch einen Antrieb 35 (schematisch in den Fig. 2 und 7 als hydraulische Kolben-Zylindereinheit beispielhaft dargestellt), der einerseits an dem Hebel 12 und andererseits an der Karosserie gelagert ist, über seine beiden Hebel 11, 12 nach hinten in Richtung zum Verdeckstauraum 6 verschwenkt (Fig. 7) und darin abgesenkt (Fig. 8), wobei es in etwa in vertikaler Ausrichtung unmittelbar vor dem Heckelement 4 angeordnet ist. Die Innenabdeckung 10 ist wieder zurückgeschwenkt und deckt mit ihrem oberen, sich nach hinten erstreckenden Rand und der wieder herabgeklappten Stauraumabdeckung 7 das abgelegte Fahrzeugdach (Dachelement 3 und Heckelement 4) ab. Damit befindet sich das Fahrzeugdach 1 des Cabriolets 2 in seiner Offenstellung.

Wenn die Innenabdeckung 10 flexibel gestaltet ist, z. B. als starrer Rahmen mit einer flexiblen Bespannung, kann bei geschlossenem Fahrzeugdach ein Nutzraum 33 (in Fig. 1 schematisch durch strichlierte Linie dargestellt) hinter den Sitzen in den Verdeckstauraum 6 hinein erweitert werden.

### Bezugszeichenliste

- 1: Fahrzeugdach
- 2: Cabriolet
- 3: Dachelement
- 4: Heckelement
- 5: Seitenscheibe
- 6: Verdeckstauraum
- 7: Stauraumabdeckung
- 8: Lenker
- 9: Gelenk
- 10: Innenabdeckung
- 11: erster Hebel
- 12: zweiter Hebel
- 13: hinterer Türrahmen
- 14: Gelenk
- 15: Vorderrand
- 16: Endabschnitt
- 17: Gelenk
- 18: Hinterrand
- 19: Gelenk
- 20: Gelenk
- 21: Lenker
- 22: Lenker
- 23: Gelenk
- 24: Unterrand
- 25: Gelenk
- 26: Gelenk
- 27: Gelenk
- 28: Schwenkgelenk
- 29: Lagerteil
- 30: Vorderrand
- 31: Windlauf
- 32: Frontscheibe
- 33: Nutzraum
- 34: Antrieb
- 35: Antrieb

## Patentansprüche

1. Fahrzeug mit einem umwandelbaren Fahrzeugdach mit einem vorderen Dachelement (3) und einem hinteren Heckelement (4), die mittels Hebeleinrichtungen (11, 12, 21, 22) an der Karosserie schwenkbar gelagert und in einen von einer schwenkbaren Stauraumabdeckung (7) abdeckbaren Verdeckstauraum (6) ablegbar sind,
wobei das vordere Dachelement (3) jeweils mittels zweier einen Viergelenkmechanismus bildenden Hebel (11, 12) und das hintere Heckelement (4) mittels zweier einen Viergelenkmechanismus bildenden Lenker (21, 22) an karosserieseitig feststehenden Gelenken (14, 19 bzw. 25, 27) angelenkt sind und
das vordere Dachelement (3) und das hintere Heckelement (4) in dem Verdeckstauraum (6) im wesentlichen in vertikaler Anordnung abgelegt sind.

2. Fahrzeug nach Anspruch 1,
**dadurch gekennzeichnet, daß** das insbesondere eine Heckscheibe enthaltende Heckelement (4) als Einheit in den Verdeckstauraum (6) ablegbar ist.

3. Fahrzeug nach Anspruch 1 oder 2,
**dadurch gekennzeichnet, daß** das Heckelement (4) bei geschlossenem Dachelement (3) im Verdeckstauraum (6) ablegbar ist.

4. Fahrzeug nach einem der Ansprüche 1 bis 3,
**dadurch gekennzeichnet, daß** eine an der Karosserie schwenkbar gelagerte Stauraumabdeckung (7) des Verdeckstauraumes (6) bei geschlossenem Heckelement (4) aus ihrer Abdeckstellung nach oben schwenkbar ist.

5. Fahrzeug nach einem der Ansprüche 1 bis 4,
**dadurch gekennzeichnet, daß** bei geschlossenem Fahrzeugdach (1) die Hebeleinrichtung bzw. die Hebel (11, 12) des Dachelements (3) im wesentlichen vertikal in etwa im Bereich eines seitlichen Vorderrandes (15) des Heckelements (4) angeordnet sind.

6. Fahrzeug nach einem der Ansprüche 1 bis 5,
**dadurch gekennzeichnet, daß** der hinter den Sitzen angeordnete Verdeckstauraum (6) für das Fahrzeugdach (1) zu den Sitzen hin von einer schwenkbaren Innenabdeckung (10) begrenzt ist.

7. Fahrzeug nach Anspruch 6,
**dadurch gekennzeichnet, daß** die Innenabdeckung (10) zumindest teilweise flexibel ist.

8. Fahrzeug nach einem der Ansprüche 1 bis 7,
**dadurch gekennzeichnet, daß** zwischen den Sitzen und dem Verdeckstauraum (6) bzw. der Innenabdeckung (10) ein Nutzraum (33) vorgesehen ist.

9. Fahrzeug nach einem der Ansprüche 1 bis 8,
**dadurch gekennzeichnet, daß** die beiden Hebeleinrichtungen (11, 12, 21, 22) derart ausgelegt sind, daß zum vollständigen Öffnen des Fahrzeugdaches (1) nach dem Hochschwenken der Stauraumabdeckung (7) und dem Vorschwenken der Innenabdeckung (10) zunächst das Heckelement (4) und anschließend das Dachelement (3) in den Verdeckstauraum (6) abgelegt wird.

10. Fahrzeug nach einem der Ansprüche 1 bis 9,
**dadurch gekennzeichnet, daß** das Dachelement (3) und das Heckelement (4) jeweils einen eigenen Antrieb (35 bzw. 34) aufweisen.

11. Fahrzeug nach einem der Ansprüche 1 bis 10,
**dadurch gekennzeichnet, daß** die Gelenke der Hebel (11, 12) und Lenker (21, 22) karosserieseitig an einer Lagerplatte (29) angeordnet sind.

## Claims

1. Vehicle having a convertible vehicle roof comprising a front roof element (3) and a rear tail element (4) which, by means of lever devices (11, 12, 21, 22), are mounted on the body such that they can be pivoted and can be stored in a hood stowage space (6) that can be covered by a pivotable stowage space cover (7),
the front roof element (3) being attached, in each case by means of two levers (11, 12) forming a four-bar mechanism, and the rear tail element (4) being attached by means of two links (21, 22) forming a four-bar mechanism, to stationary joints (14, 19 and 25, 27) that are fixed to the body, and
the front roof element (3) and the rear tail element (4) being stored in the hood stowage space (6) substantially in a vertical arrangement.

2. Vehicle according to Claim 1, **characterized in that** the tail element (4), in particular containing a rear window, can be stored in the hood stowage space (6) as a unit.

3. Vehicle according to Claim 1 or 2, **characterized in that**, when the roof element (3) is closed, the tail element (4) can be stored in the hood stowage space (6).

4. Vehicle according to one of Claims 1 to 3, **characterized in that**, when the tail element (4) is closed, a stowage space cover (7) of the hood stowage space (6) that is mounted on the body such that it can be pivoted can be pivoted upwards from its covering position.

5. Vehicle according to one of Claims 1 to 4, **characterized in that**, when the vehicle roof (1) is closed, the lever device or the levers (11, 12) of the roof element (3) are arranged substantially vertically approximately in the region of a lateral front edge (15) of the tail element (4).

6. Vehicle according to one of Claims 1 to 5, **characterized in that** the covered stowage space (6) for the vehicle roof (1), which is arranged behind the seats, is delimited from the seats by a pivotal inner cover (10).

7. Vehicle according to Claim 6, **characterized in that** the inner cover (10) is at least partly flexible.

8. Vehicle according to one of Claims 1 to 7, **characterized in that** a useful space (33) is provided between the seats and the hood stowage space (6) or the inner cover (10).

9. Vehicle according to one of Claims 1 to 8, **characterized in that** the two lever devices (11, 12, 21, 22) are designed in such a way that, in order to open the vehicle roof (1) completely, after pivoting the stowage space cover (7) up and pivoting the inner cover (10) forward, firstly the tail element (4) and then the roof element (3) are stored in the hood stowage space (6).

10. Vehicle according to one of Claims 1 to 9, **characterized in that** the roof element (3) and the tail element (4) each have an individual drive (35 and 34, respectively).

11. Vehicle according to one of Claims 1 to 10, **characterized in that** the joints of the levers (11, 12) and links (21, 22) on the body side are arranged on a mounting plate (29).

## Revendications

1. Véhicule équipé d'un toit convertible comprenant un élément antérieur de pavillon (3) et un élément postérieur (4) qui sont montés à pivotement sur la carrosserie, au moyen de systèmes de leviers (11, 12, 21, 22), et peuvent être remisés dans un compartiment (6) de rangement d'une capote, pouvant être recouvert par une coiffe pivotante (7),
sachant que l'élément antérieur de pavillon (3) et l'élément postérieur (4) sont respectivement rattachés à des articulations (14, 19, respectivement 25, 27) à installation fixe côté carrosserie, respectivement au moyen de deux biellettes (11, 12) matérialisant un mécanisme d'articulation quadruple, et de deux biellettes (21, 22) matérialisant un mécanisme d'articulation quadruple, et
que l'élément antérieur de pavillon (3) et l'élément postérieur (4) sont remisés en un agencement sensiblement vertical dans le compartiment (6) de rangement de la capote.

2. Véhicule selon la revendication 1,
**caractérisé par le fait que** l'élément postérieur (4), englobant notamment une lunette arrière, peut être remisé sous la forme d'un ensemble unitaire dans le compartiment (6) de rangement de la capote.

3. Véhicule selon la revendication 1 ou 2,
**caractérisé par le fait que** l'élément postérieur (4) peut être remisé dans le compartiment (6) de rangement de la capote à l'état fermé de l'élément de pavillon (3).

4. Véhicule selon l'une des revendications 1 à 3,
**caractérisé par le fait que**, lorsque l'élément postérieur (4) est fermé, une coiffe (7) du compartiment (6) de rangement de la capote, montée à pivotement sur la carrosserie, peut pivoter vers le haut à partir de sa position de recouvrement.

5. Véhicule selon l'une des revendications 1 à 4,
**caractérisé par le fait que**, lorsque le toit (1) dudit véhicule est fermé, le système de leviers ou les leviers (11, 12) de l'élément de pavillon (3) est (sont) respectivement disposé(s) pour l'essentiel verticalement, sensiblement dans la région d'un bord antérieur latéral (15) de l'élément postérieur (4).

6. Véhicule selon l'une des revendications 1 à 5,
**caractérisé par le fait que** le compartiment (6) de rangement de la capote, dédié au toit (1) dudit véhicule et placé derrière les sièges, est délimité en direction desdits sièges par une coiffe intérieure pivotante (10).

7. Véhicule selon la revendication 6,
**caractérisé par le fait que** la coiffe intérieure (10) est au moins partiellement flexible.

8. Véhicule selon l'une des revendications 1 à 7,
**caractérisé par le fait qu'**un espace utile (33) est prévu entre les sièges et, respectivement, le compartiment (6) de rangement de la capote ou la coiffe intérieure (10).

9. Véhicule selon l'une des revendications 1 à 8,
**caractérisé par le fait que** les deux systèmes de leviers (11, 12, 21, 22) sont conçus de façon telle que, pour ouvrir intégralement le toit (1) dudit véhicule à l'issue du pivotement ascendant de la coiffe (7) du compartiment de rangement et à l'issue du pivotement de la coiffe intérieure (10) vers l'avant, tout d'abord l'élément postérieur (4), puis l'élément de pavillon (3) soient remisés dans le compartiment (6) de rangement de la capote.

10. Véhicule selon l'une des revendications 1 à 9,
**caractérisé par le fait que** l'élément de pavillon (3) et l'élément postérieur (4) sont respectivement équipés d'un entraînement propre (35, respectivement 34).

11. Véhicule selon l'une des revendications 1 à 10,
**caractérisé par le fait que** les articulations des leviers (11, 12) et des biellettes (21, 22) sont disposées sur une platine de montage (29), côté carrosserie.
